# EUROPEAN PATENT SPECIFICATION

(11) **EP 1 207 517 B1**
(45) Date of publication and mention of the grant of the patent: **03.01.2007**
(21) Application number: 00125014.1
(22) Date of filing: 16.11.2000
(51) Int. Cl.: G10L 15/08

(54) **Method for recognizing speech**
Verfahren zur Spracherkennung
Procédé de reconnaissance de la parole

(43) Date of publication of application: 22.05.2002
(73) Proprietor: Sony Deutschland GmbH, 50829 Köln (DE)
(72) Inventor: Marasek, Krzysztof, c/o Sony Internat.(Europe)GmbH, 70327 Stuttgart (DE); Kemp, Thomas, c/o Sony Internat. (Europe) GmbH, 70327 Stuttgart (DE); Goronzy, Silke, c/o Sony Internat. (Europe) GmbH, 70327 Stuttgart (DE); Kompe, Ralf, c/o Sony Internat. (Europe) GmbH, 70327 Stuttgart (DE)
(74) Representative: Müller - Hoffmann & Partner

(56) References cited:
- EP-A- 0 831 456
- US-A- 4 677 673
- BENNACEF S K ET AL: "A SPOKEN LANGUAGE SYSTEM FOR INFORMATION RETRIEVAL" YOKOHAMA, JAPAN, SEPT. 18 - 22, 1994,YOKOHAMA: ASJ,JP, 18 September 1994 (1994-09-18), pages 1271-1274, XP000855492
- PATENT ABSTRACTS OF JAPAN vol. 018, no. 273 (P-1742), 24 May 1994 (1994-05-24) & JP 06 043896 A (CLARION CO LTD), 18 February 1994 (1994-02-18)
- NIMI Y. ET AL: 'A dialog control strategy based on the reliability of speech recognition' PROC OF ICSLP 03 October 1996, pages 534 - 537

## Description

The present invention relates to a method for recognizing speech according to claim 1, and in particular to a method for recognizing speech using confidence measures in a process of large vocabulary continuous speech recognition (LVCSR).

In many conventional devices and methods for recognizing speech after recognition of a received utterance or speech phrase an estimation is given on the reliability of the recognized utterance or speech phrase, in particular to enable a decision on whether or not the utterance or speech phrase in question and its recognized form can be accepted for further processing or has to be rejected and to be exchanged by an utterance or speech phrase to be entered newly by the speaker or user.

A major drawback of prior art methods for recognizing speech is that the total computational burden is distributed over the entire received utterance to ensure a detailed and thorough analysis. Therefore, many methods cannot be implemented in small systems or devices, for example in hand-held appliances or the like, as these small systems possess a performance rate which is not sufficient to recognize continuous speech and estimate the reliability of the recognized phrases when the entire received utterance has to be thoroughly analyzed.

A known method for recognizing speech is disclosed in "A dialog control strategy based on the reliability of speech recognition" by Nimi Y et al. in PROCEEDINGS OF ICSLP, 3-6 October 1996, pages 534-537. Thereby, a reliability measure is calculated for an utterance of a user, and the utterance is rejected, directly confirmed or indirectly confirmed.

It is therefore an object of the present invention to provide a method for recognizing speech, in particular in the field of large vocabulary continuous speech recognition, which can easily be implemented in small dialogue systems and which also gives a robust and reliable estimation on the recognition quality.

The object is achieved by a method for recognizing speech with the characterizing features of claim 1. Preferred embodiments of the inventive method for recognizing speech are within the scope of the dependent claims.

In the method for recognizing speech according to the invention a received utterance is subjected to a recognizing process in its entirety. Further, an only rough estimation is made on whether or not said received and recognized utterance is accepted or rejected in its entirety. Additionally, in the case of accepting said utterance it is thoroughly reanalyzed to extract its meaning and/or intention. Additionally, based on the reanalysis and its result key-phrases and/or keywords are extracted from the utterance essentially being representative for its meaning.

In contrast to prior art methods for recognizing speech after recognizing the utterance in its entirety within a recognizing process an only rough estimate is performed describing the reliability of the recognized utterance for necessary speech phrases. Therefore, only a small burden of estimation and calculation is to be focussed on the entire received utterance in a first step. The main part of the calculation is then focussed on the reanalysis of the utterance for extracting its meaning, intention and therefore for generating key-phrases and/or the keywords of the utterance. Keywords or key-phrases are parts or subunits of the utterances which carry the main importance of the message to be transported by the utterance. Consequently, the inventive method for recognizing speech saves calculational and estimation power by focussing on important parts of an utterance, namely the key-phrases and keywords, and on their generation, extraction and/or confidence estimation from the utterance.

For a dialogue system it is preferred that in the case of rejecting said utterance in its entirety a rejection signal is generated. In particular, a reprompting signal and/or an invitation to repeat or restart the last utterance is generated and/or output as said rejection signal. This is of particular advantage in a dialogue system as the user or current speaker is informed that his last utterance or speech phrase has not been recognized correctly by the recognizing system or method.

For performing the above mentioned rough estimate upon accepting and/or rejecting a received and/or recognized utterance a rough or simple confidence measure for the entire utterance is determined. This is of particular advantage in contrast to prior art methods for recognizing speech as these prior art methods generally calculate confidence measures which are based on each single word or subword unit within said utterance. Therefore, for the entire utterance prior art methods have to calculate and determine a relative large number of single word confidence measures.

Additionally, prior art methods for recognizing speech have then afterwards to perform an overall estimation to find a confidence for the whole utterance with respect to the set of single word confidence measures. In contrast to these prior art methods the inventive method calculates in the initial phase of recognition a confidence measure for the whole utterance in its entirety and in a simple and rough manner. Only if on the basis of said whole utterance confidence measure an acceptance of the utterance and the recognized phrases thereof is suggested, further processing is initiated.

It is preferred to base said reanalysis on a sentence analysis, and in particular on grammar, syntax and/or semantic analysis or the like. These measures are useful as they are concentrated on extracting the intention and the meaning as well as on the extraction of the key-phrases or keywords of the utterance. In particular, in dialogue systems it is necessary that the method implemented in the system is able to extract from the more or less complex received utterance the most important parts thereof so as to reduce the more or less complex utterance to its intention and meaning, in particular by collecting the key-phrases or keywords.

It is therefore of further advantage to form a relatively thorough estimation on whether the extracted key-phrases and/or keywords of the utterance can be accepted or have to be rejected in particular by the previous confidence measure.

According to the inventive method for recognizing speech a detailed and/or robust confidence measure for each single key-phrase/keyword is determined for said thorough estimation of accepting/rejecting said key-phrases and/or keywords.

To further reduce the computational burden of the inventive method for recognizing speech the above described detailed and/or robust confidence measure for the derived key-phrases/keywords of the received and recognized utterance is only derived if within said step of deriving said key-phrase/keyword an indication and/or demand therefor is generated or does occur.

Some of the basic ideas of the inventive methods for recognizing speech in contrast to prior art methods can be described and summarized as follows: Confidence measures (CM) try to judge on how reliable an automatic speech recognition process is performed with respect to a given word or utterance. The confidence measure proposed in connection with the present invention is particularly designed for dialogue systems which have to deal with continuous speech input and which have to perform distinct actions based on data extracted and gathered from the input and recognized speech. The inventive method for recognizing speech combines various sources of information to judge if an input and recognized utterance and/or the particular selected words are recognized correctly.

After a first step of recognizing the utterance in its entirety a simple, rough and very general confidence measure is computed and generated for the whole, i. e. entire utterance. If the recognized utterance is classified as being accepted the method turns to a further step of processing. Depending on the requirements of the method particularly implemented in a system a more detailed confidence judgement for the words or subword units which are of special importance can be generated on demand. These words or subword units of special importance are called key-phrases or keywords. The further processing steps, i. e. the reanalysis of the utterance, may explicitly ask for the calculation of the reliability of the key-phrases and/or keywords in the sense of a detailed and more robust confidence measure focussing on the corresponding single key-phrases or keywords.

For the judgement of recognition quality in large vocabulary continuous speech dialogue systems a two-step system is therefore proposed. The first step of recognizing the utterance entirely and of calculating a simple confidence measure gives an indication if most of the utterance was recognized correctly. For such a classification, however, not every single word of the user input is equally important. The knowledge about the importance is usually not located within the information stored in the speech recognition system. It is therefore proposed to add an interface to the speech recognition subsystem that allows a following component to query specifically for the confidence of single words of the recognized utterance.

Therefore, after the analysis of the meaning or intention of the utterance in its entirety, an isolated word, more complicated and more robust confidence measure is applied to the isolated words or short phrases of special interest, i. e. it is applied to the key-phrases or keywords of the utterance, in particular on demand of following speech recognition subsystems for entirely specifying the utterance.

If standard methods for the confidence measure judgement would be applied at this stage this would enlarge the computational burden. One could simply extend the approach developed so far for isolated words to continuous speech recognition and compute a very detailed confidence measure for each single word in the utterance. Since this would be very costly, the system response would be slowed down. For dialogue systems which have to respond fast to the input utterance of the user or speaker this is not acceptable. Therefore, the inventive method is proposed as follows.

The purpose of the first processing step of computing a rather simple confidence measure for the utterance is to aid the finding of the general structure of the utterance. If this classification is done with high enough confidence, subsequent steps of proceeding can further process the received and recognized utterance. In these further processing steps the sentence or utterance is further analyzed so as to identify the important keywords of the sentence or utterance. On demand for these keywords a second more detailed and thorough confidence measure can be computed. Furtheron, additional and more sophisticated features that need a high amount of computational effort can be used in the second run to compute a confidence measure. Thereby, the expensive computational pathway is reduced and focussed to those locations of the utterance where it is really needed in the context of the application. This reduces the overall computational load and makes confidence estimation feasible in small appliances.

For example, in a train time table information system the user utters "I want to go from Hamburg to Stuttgart". The intention of this utterance is to go from one city to another. For this information only the starting city and the destination have to be verified, whereas the rest of the sentence can be considered as filling phrases or "fillers". These filling phrases have not to be recognized with high accuracy as long as the intention of travelling from one point to another is known. Therefore, what is important is to verify the start city and destination. Therefore, according to the invention the computational load is focussed to these keywords, i. e. the start and destination of the intended travel. Therefore, the second confidence measure is computed - if required - on start and destination only.

In other applications the speech recognizer outputs alternative word hypotheses arranged in a graph in order to cope with uncertainties and ambiguities. There exist many possible paths in the word graph each of which corresponds to a sentence hypothesis. The subsequent linguistic processor searches for the optimal path according to linguistic knowledge and to acoustic scores previously computed in the speech recognizer. During the search where the linguistic processor parallely explores several paths it may demand the confidence measure calculating module to score certain keywords. That means, at each following step a confidence measure can be queried. Which words are the keywords depends on the current stage of syntactic and semantic analysis within the underlying syntactic/semantic analysis.

The invention will be shown in more detail by means of a schematical drawing describing a preferred embodiment of the inventive method for recognizing speech.

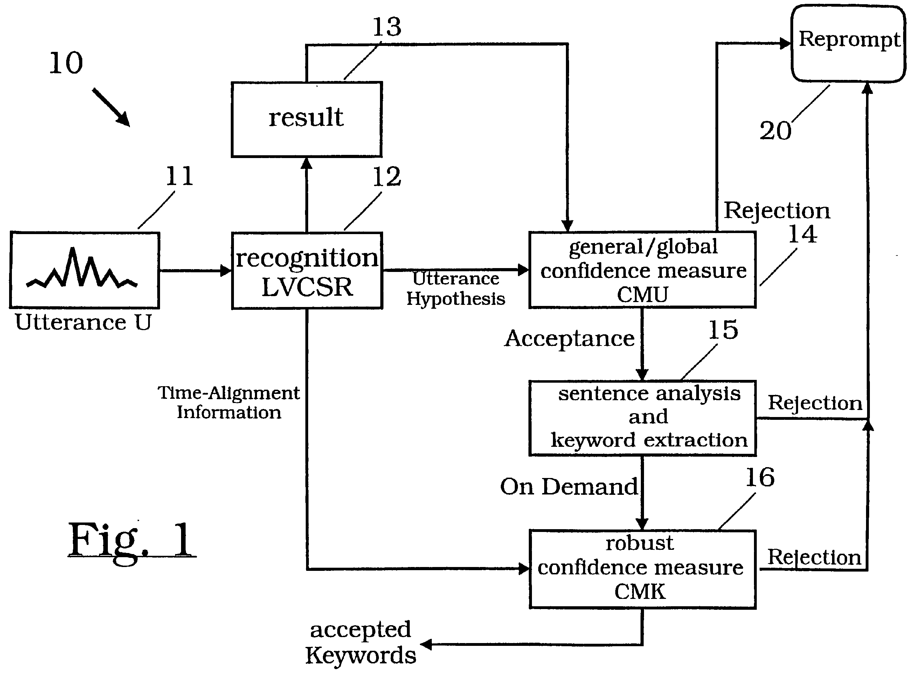

Figure 1 describes by means of a schematical block diagram an embodiment of the inventive method for recognizing speech.

In a first step 11 continuous speech input is received as an utterance U and preprocessed. In step 12 a large vocabulary continuous speech recognizing process LVCSR is performed on the continuous speech input, i. e. the received utterance U or speech phrase so as to generate a recognition result in step 13. The recognition result of step 13 serves as an utterance hypothesis which is fed into step 14 for calculating a simple and rough confidence measure CMU for the entire utterance hypothesis of step 13. In the case of a rejection given by the confidence measure CMU of the whole utterance hypothesis a reprompt or invitation to repeat the utterance is initiated in step 20.

In the case of an acceptance of the utterance hypothesis a thorough sentence analysis is performed in step 15 so as to extract keywords. In a further step it is calculated whether or not a confidence measure is necessary to evaluate the keywords. If a further evaluation on the reliability of the extracted keywords is necessary a thorough confidence measure CMK calculation is demanded using time-alignment information called from the large vocabulary continuous speech recognizing unit of step 12. If no confidence measure CMK was necessary or the confidence measure CMK for the keywords was sufficient, the generated and extracted keywords and key-phrases are accepted. If the detailed confidence measure CMK was not sufficient the keywords are rejected and a reprompt is initiated branching the process to step 20.

## Claims

1. Method for recognizing speech.
- wherein a received utterance (U) is subjected to a speech recognition process (12) in its entirety,
- wherein, based on said speech recognition process, a rough estimation (14) is made on whether or not said received utterance (U) is accepted or rejected in its entirety,
- wherein in the case of accepting said utterance (U) it is thoroughly reanalyzed (15) so as to extract its meaning and/or intention,
- wherein based on the reanalysis keywords and/or key-phrases are extracted (15) from the utterance (U) essentially being representative for its meaning, and
- wherein a detailed and/or robust confidence measure (CMK) for each single key-phrase or keyword is determined (16) for accepting/rejecting said extracted key-phrases and/or keywords

2. Method according to claim 1,
wherein in the case of rejecting the utterance (U) a rejection signal is generated.

3. Method according to claim 2,
wherein as said rejection signal a reprompting signal and/or in the case of a dialogue system an invitation to repeat/restart the last utterance (U) is generated and/or output.

4. Method according to any one of the preceding claims,
wherein for said rough estimation on accepting/rejecting the utterance a rough and/or simple confidence measure (CMU) for the entire utterance (U) is determined.

5. Method according to any one of the preceding claims,
wherein said reanalysis of the received utterance (U) is based on a sentence analysis, in particular based on a grammar, syntax, semantic analysis and/or the like.

6. Method according to any one of the preceding claims,
wherein a confidence measure (CMK) for the single key-phrase/keyword is determined only if in the step of deriving said key-phrase/keyword an indication therefore occurs so as to reduce the computational burden.

## Patentansprüche

1. Verfahren zur Spracherkennung,
- bei dem eine empfangene Äußerung (U) als Ganzes einem Spracherkennungsprozess (12) unterworfen wird,
- bei dem anhand des Spracherkennungsprozesses eine grobe Schätzung (14) erfolgt, ob die empfangene Äußerung (U) als Ganzes akzeptiert oder verworfen wird,
- bei dem im Fall des Akzeptierens der Äußerung (U) diese erneut vollständig analysiert wird (15), um ihre Bedeutung und/oder ihre Intention zu extrahieren.
- bei dem anhand der erneuten Analyse jene Schlüsselwörter und/oder Schlüsselphrasen aus der Äußerung (U) extrahiert werden (15), die für ihre Bedeutung im Wesentlichen repräsentativ sind, und
- bei dem ein genaues und/oder robustes Vertraulichkeitsmaß (CMK) für jede einzelne Schlüsselphrase oder jedes einzelne Schlüsselwort bestimmt wird (16), um die extrahierten Schlüsselphrasen und/oder Schlüsselwörter zu akzeptieren/zu verwerfen.

2. Verfahren nach Anspruch 1,
bei dem im Fall des Verwerfens der Äußerung (U) ein Verwerfungssignal erzeugt wird.

3. Verfahren nach Anspruch 2,
bei dem als das Verwerfungssignal ein Neuaufforderungssignal und/oder im Fall eines Dialogsystems eine Aufforderung zum Wiederholen/Neubeginnen der letzten Äußerung (U) erzeugt und/oder ausgegeben wird.

4. Verfahren nach einem der vorhergehenden Ansprüche,
bei dem für die grobe Schätzung bezüglich der Annahme/des Verwerfens der Äußerung ein grobes und/oder einfaches Vertraulichkeitsmaß (CMU) für die gesamte Äußerung (U) bestimmt wird.

5. Verfahren nach einem der vorhergehenden Ansprüche,
bei dem die erneute Analyse der empfangenen Äußerung (U) auf einer Satzanalyse basiert und insbesondere auf einer grammatischen, syntaktischen oder semantischen Analyse und/oder dergleichen basiert.

6. Verfahren nach einem der vorhergehenden Ansprüche,
bei dem ein Vertraulichkeitsmaß (CMK) für die einzelne Schlüsselphrase/das einzelne Schlüsselwort nur bestimmt wird, falls im Schritt des Ableitens der Schlüsselphrase/des Schlüsselworts ein Hinweis hierfür auftritt, um so die Rechenbelastung zu verringern.

## Revendications

1. Procédé de reconnaissance de la parole,
- dans lequel un énoncé reçu (U) est soumis à un processus de reconnaissance de la parole (12) dans sa totalité,
- dans lequel, sur la base dudit processus de reconnaissance de la parole, une estimation grossière (14) est effectuée quant au fait que ledit énoncé reçu (U) soit accepté ou rejeté dans sa totalité,
- dans lequel, en cas d'acceptation dudit énoncé (U), celui-ci est ré-analysé en détail (15) de façon à extraire sa signification et/ou son intention,
- dans lequel, sur la base de la ré-analyse, des mots clé et/ou des phrases clé sont extraits (15) de l'énoncé (U) comme étant essentiellement représentatifs de sa signification, et
- dans lequel une mesure de confiance détaillée et/ou solide (CMK) pour chaque phrase clé ou mot clé unique est déterminée (16) afin d'accepter/de rejeter lesdites phrases clé et/ou lesdits mots clé extrait(e)s.

2. Procédé selon la revendication 1,
dans lequel, en cas de rejet de l'énoncé (U), un signal de rejet est généré.

3. Procédé selon la revendication 2,
dans lequel, en tant que signal de rejet, un signal d'incitation et/ou, dans le cas d'un système de dialogue, une invitation à répéter/redémarrer le dernier énoncé (U) est généré(e) et/ou transmis(e).

4. Procédé selon l'une quelconque des revendications précédentes,
dans lequel, pour ladite estimation grossière d'acceptation/de rejet de l'énoncé, une mesure de confiance grossière et/ou simple (CMU) pour l'énoncé entier (U) est déterminée.

5. Procédé selon l'une quelconque des revendications précédentes,
dans lequel ladite ré-analyse de l'énoncé reçu (U) est basée sur une analyse de phrase, en particulier sur une analyse grammaticale, syntaxique, sémantique et/ou similaire.

6. Procédé selon l'une quelconque des revendications précédentes,
dans lequel une mesure de confiance (CMK) pour la phrase clé/le mot clé unique est déterminée uniquement si, à l'étape de dérivation de ladite phrase clé/dudit mot clé, une indication se produit de façon à réduire la charge de calcul.
